(19) Europäisches Patentamt

European Patent Office

Office européen des brevets

(11) EP 1 207 666 A2

(12) DEMANDE DE BREVET EUROPEEN

(43) Date de publication:
22.05.2002 Bulletin 2002/21

(51) Int Cl.⁷: $H04L\ 27/26$

(21) Numéro de dépôt: 01402895.5

(22) Date de dépôt: 12.11.2001

(84) Etats contractants désignés:
AT BE CH CY DE DK ES FI FR GB GR IE IT LI LU
MC NL PT SE TR
Etats d'extension désignés:
AL LT LV MK RO SI

(30) Priorité: 17.11.2000 FR 0014906

(71) Demandeur: ALCATEL
75008 Paris (FR)

(72) Inventeur: Dartois, Luc
78955 Carrieres sous Poissy (FR)

(74) Mandataire: El Manouni, Josiane et al
COMPAGNIE FINANCIERE ALCATEL
Dépt. Propr. Industrielle,
30, avenue Kléber
75116 Paris (FR)

(54) **Procédé pour optimiser les performances d'un émetteur pour système de radiocommunications mobiles**

(57) Procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, un calcul de transformée de Fourier discrète inverse IDFT, un recouvrement des blocs d'échantillons traités, et un sur-échantillonnage, et ledit procédé étant essentiellement caractérisé en ce que, pour une fréquence d'échantillonnage d'entrée donnée, un ordre de grandeur donné de la fréquence d'échantillonnage de sortie, et un ordre de grandeur donné de la résolution fréquentielle requise, la longueur de la DFT et la longueur de l'IDFT sont choisies de manière à permettre de choisir le plus finement possible le pourcentage de recouvrement et/ou le facteur de sur-échantillonnage.

EP 1 207 666 A2

## Description

La présente invention concerne d'une manière générale les émetteurs utilisés dans les systèmes de radiocommunications mobiles.

Dans ces émetteurs, une distinction est habituellement faite entre des fonctions de traitement en bande de base, à fréquence intermédiaire, et à fréquence radio. Il est avantageux d'effectuer en numérique non seulement les fonctions de traitement en bande de base, mais aussi les fonctions de traitement à fréquence intermédiaire. Ces dernières incluent essentiellement des fonctions de filtrage. Elles sont en outre avantageusement effectuées dans le domaine fréquentiel, notamment dans le cas d'émetteurs multi-porteuses (utilisés en particulier dans les stations de base).

La transformation du domaine temporel vers le domaine fréquentiel est alors effectuée pour chaque porteuse au moyen d'une transformée de Fourier discrète, ou DFT (pour « Discrete Fourier Transform » en anglais). Le filtrage est ensuite effectué pour chaque porteuse, au moyen de simples opérations de multiplication par des coefficients de filtrage. La transformation inverse du domaine fréquentiel vers le domaine temporel est ensuite effectuée pour l'ensemble des porteuses au moyen d'une transformée de Fourier discrète inverse, ou IDFT (pour « Inverse Discrete Fourier Transform » en anglais).

On prévoit en outre généralement un certain recouvrement des blocs d'échantillons ainsi traités, selon la technique dite en anglais de « overlap », avec ses deux variantes dites de « overlap-add » ou « overlap-save ».

On prévoit en outre généralement que la fréquence d'échantillonnage en sortie soit différente de la fréquence d'échantillonnage en entrée. Notamment si elle est supérieure, on parle de sur-échantillonnage, ou d'interpolation.

Des exemples de telles architectures peuvent être trouvés dans la littérature, par exemple dans le document WO 99/65172.

Les performances (en termes de puissance de calcul, de coût, de retard de groupe (ou « group delay » en anglais), de qualité des signaux synthétisés, ...) dépendent des choix effectués pour les différents paramètres définissant ces différents traitements: fréquence d'échantillonnage en entrée et en sortie, longueur (en nombre d'échantillons) de la DFT et de l'IDFT, pourcentage de recouvrement, ....etc. Ainsi il serait souhaitable de disposer d'une méthode pour le choix de ces paramètres, de manière à optimiser les performances, pour un système donné. La présente invention a notamment pour but de répondre à ce besoin.

Ainsi, un objet de la présente invention est un procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, un calcul de transformée de Fourier discrète inverse IDFT, un recouvrement des blocs d'échantillons traités, et un sur-échantillonnage, et ledit procédé étant essentiellement caractérisé en ce que, pour une fréquence d'échantillonnage d'entrée donnée, un ordre de grandeur donné de la fréquence d'échantillonnage de sortie, et un ordre de grandeur donné de la résolution fréquentielle requise, la longueur LDFT de la DFT et la longueur LIDFT de l'IDFT sont choisies de manière à permettre de choisir le plus finement possible le pourcentage de recouvrement et/ou le facteur de sur-échantillonnage.

La présente invention permet ainsi, notamment, d'optimiser la puissance de calcul donc le coût ainsi que le retard de groupe (ou « group delay » en anglais, ou délai entre signal de sortie et signal d'entrée) dû à la fonction de filtrage, et la qualité des signaux synthétisés.

Suivant un premier mode de réalisation, si le rapport LIDFT/LDFT n'est pas entier, le dénominateur de la fraction LIDFT/LDFT une fois réduite est choisi le plus faible possible, de manière à permettre de choisir le plus finement possible la longueur L des blocs d'échantillons, hors recouvrement, avant DFT, et donc le pourcentage de recouvrement.

Avantageusement, suivant ce premier mode de réalisation, la fréquence d'échantillonnage d'entrée étant égale à 3.84 MHz, la valeur souhaitée pour la fréquence d'échantillonnage de sortie étant proche de 80 MHz, et la valeur souhaitée pour la résolution fréquentielle étant proche de 80kHz, LDFT est choisie égale à 48 et LIDFT est choisie égale à 1024.

Suivant un deuxième mode de réalisation, si le rapport LDFT/LIDFT est entier, les longueurs LDFT et LIDFT sont choisies de manière à permettre de choisir le plus finement possible le facteur de sur-échantillonnage, ou la fréquence d'échantillonnage de sortie.

Avantageusement, suivant ce deuxième mode de réalisation, la fréquence d'échantillonnage d'entrée étant égale à 3.84 MHz, la valeur souhaitée pour la fréquence d'échantillonnage de sortie étant proche de à 80 MHz, et la valeur souhaitée pour la résolution fréquentielle étant proche de 80kHz, LDFT est choisie égale à 45 (5*9) et LIDFT est choisie égale à 1260 (5*9*7*4), permettant une réalisation de DFT et IDFT sous la forme rapide dite de Rader-Vinograd.

En outre, la présente invention permet de résoudre un autre problème qui est que, notamment une fois le choix de tels paramètres effectué, la fréquence centrale souhaitée pour chaque porteuse ne correspond pas nécessairement à l'échantillon de fréquence le plus proche issu de la DFT. Autrement dit, la canalisation des porteuses ainsi obtenue ne coïncide pas nécessairement avec celle requise pour le système considéré.

La présente invention a également pour but de résoudre ce problème.

Un autre objet de l'invention est aussi un procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, et un calcul de transformée de Fourier discrète inverse IDFT, et ledit procédé étant essentiellement caractérisé en ce que, avant d'effectuer ledit calcul de DFT, on effectue une translation en fréquence, dans le domaine temporel, d'un décalage DF égal à la différence algébrique entre la fréquence centrale souhaitée pour le signal filtré correspondant et l'échantillon de fréquence le plus proche issu dudit calcul de DFT.

En outre, la présente invention permet de résoudre un autre problème qui est celui des sauts de phase apparaissant en sortie entre le dernier echantillon d'une IDFT et le 1er de l'IDFT suivante, sauts de phase dûs à une longueur L non sous multiple de LIDFT.

Un autre objet de l'invention est aussi un procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, et un calcul de transformée de Fourier discrète inverse IDFT, et ledit procédé étant essentiellement caractérisé en ce que, avant d'effectuer ledit calcul de DFT, et pour compenser les sauts de phase entre échantillons en sortie de l'IDFT, on effectue une multiplication complexe des échantillons d'entrée par un complexe de module unitaire et de phase opposée au saut de phase à compenser.

Suivant une autre caractéristique, le saut de phase à compenser étant périodique et prévisible par la fraction L/LDFT, ledit complexe s'exprime sous la forme :

$$decp = \exp(2*j*pi*numc/LDFT*L*(NUMT-1))$$

NUMT etant le numero chronologique relatif des tranches ou blocs de L échantillons,
numc etant le numero de canal IDFT correspondant à la frequence centrale de la porteuse considérée, ou au rapport Fc/Fs modulo LIDFT (Fc frequence voulue pour la porteuse).

En outre, la présente invention permet également de résoudre un autre problème qui est le suivant.

On considère le cas où la technique de recouvrement utilisée est la technique dite en anglais de « overlap-add », c'est-à-dire où on ajoute à des blocs de L échantillons consécutifs et ne se recouvrant pas du signal incident LDFT — L zéros pour former des blocs de LDFT échantillons sur lesquels est effectuée une DFT de longueur LDFT.

Suivant l'art antérieur, et comme décrit également dans les documents précités, les LDFT — L zéros sont placés à la fin des blocs de LDFT échantillons.

Or, la DFT opérant sur des blocs d'échantillons de durée limitée, et le spectre issu de la DFT étant également limité, des phénomènes de recouvrement dans le domaine temporel se produisent, responsables de dégradation de qualité du signal synthétisé. Par ailleurs le complement par des zeros a une incidence sur le temps de propagation de groupe (delai entre signal de sortie et signal d'entree) qui dans certains systemes cellulaires doit etre minimisé car influant sur les performances de contrôle de puissance et rayon de cellule (cas par exemple des systemes de 3eme generation de type CDMA (« Code Division Multiple Access » en anglais) comme l'UMTS (« Universal Mobile Telecommunication System » en anglais).

La présente invention a également pour but de limiter ces dégradations.

Un autre objet de la présente invention est ainsi un procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, un calcul de transformée de Fourier discrète inverse IDFT, et un recouvrement des suites ou blocs d'échantillons traités, ledit recouvrement étant obtenu en ajoutant LDFT — L zéros à des blocs de L échantillons de signal incident pour obtenir des blocs de LDFT échantillons à appliquer à une DFT de longueur LDFT, et ledit procédé étant essentiellement caractérisé en ce qu'on fait subir aux LDFT échantillons de ces blocs une rotation, de manière à ce que les LDFT — L zéros soient placés le plus au centre possible de ces blocs, et à ce que les L échantillons de signal soient placés de part et d'autre de ces LDFT — L zéros.

Suivant une autre caractéristique, ladite rotation est effectuée de manière à ce que les LDFT — L zéros soient placés le plus au centre possible de ces blocs, à un échantillon près lorsque L est impair.

Un autre objet de la présente invention est un émetteur pour système de radiocommunications mobiles, comportant des moyens pour optimiser les performances, selon l'un ou l'autre desdits procédés.

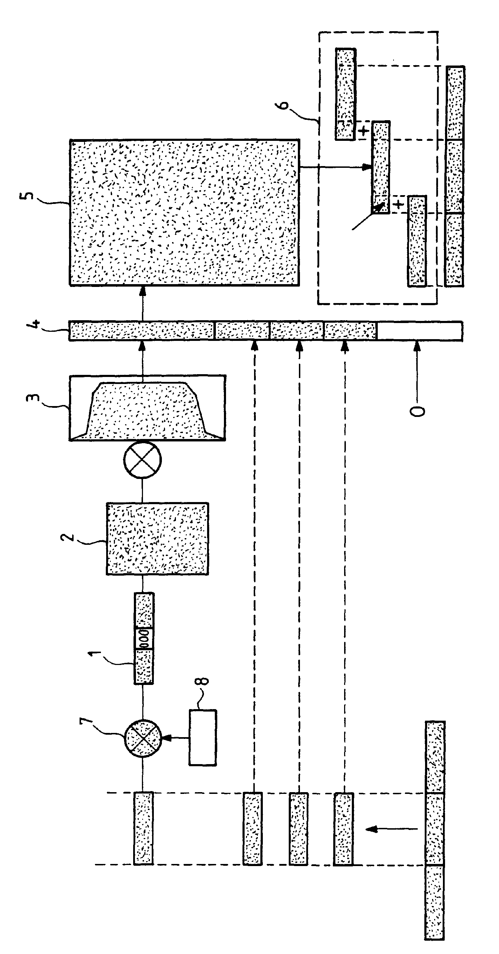

D'autres objets et caractéristiques de la présente invention apparaîtront à la lecture de la description suivante d'exemples de réalisation, faite en relation avec la figure ci-annexée destinée à illustrer un exemple de moyens de traitement prévus dans un émetteur pour système de radiocommunications mobiles, et auxquels la présente invention est applicable.

A titre d'exemple, l'émetteur considéré est un émetteur multi-porteuses (par exemple quatre porteuses dans l'exemple illustré) et les différents traitements mis en oeuvre comportent en l'occurrence, comme illustré sur cette figure:

pour chaque porteuse :

- des moyens 1 pour permettre un recouvrement des blocs d'échantillons à appliquer à la DFT, selon un certain pourcentage de recouvrement,

- des moyens 2 de calcul de transformée de Fourier discrète, ou DFT,
- des moyens 3 de filtrage dans le domaine fréquentiel,

pour l'ensemble des porteuses :

- des moyens 4 pour obtenir des blocs d'échantillons à appliquer à l'IDFT, à partir des blocs d'échantillons obtenus en sortie des différents moyens de filtrage pour les différentes porteuses, et en complétant par des zéros pour obtenir des blocs de longueur LIDFT,
- des moyens 5 de calcul de transformée de Fourier discrète inverse, ou IDFT,
- des moyens 6 de combinaison des blocs d'échantillons en sortie de l'IDFT, selon le même pourcentage de recouvrement que dans les moyens 1.

La DFT et l'IDFT sont habituellement implémentées au moyen d'algorithmes de calcul rapide tels que par exemple les algorithmes du type FFT ("Fast Fourier Transform"), Cooley-Tuckey, Rader-Vinograd, ...etc. Le type d'algorithme utilisé définit en général une longueur LDFT de DFT, et une longueur LIDFT d'IDFT. Par exemple, LDFT doit être une puissance exacte de 2, 4 ou 8 pour les algorithmes de type Cooley-Tuckey, ou un produit de facteurs premiers entre eux choisis dans la liste (2, 3, 4, 5, 6, 7, 8, 9, 16) pour les algorithmes de type Rader- Vinograd.

Le filtrage est effectué au moyen de simples opérations de multiplication des échantillons de fréquence issus de la DFT, avec des coefficients de filtrage représentant la transformée de Fourier de la réponse impulsionnelle du filtre. Le gabarit de filtrage est illustré schématiquement sur la figure, et est généralement destiné à isoler une bande de fréquences donnée.

Des descriptions des techniques de recouvrement, ou « overlap » en anglais, peuvent être trouvées dans la littérature, par exemple dans le document précité, ou encore dans « Multirate Digital Signal Processing », Ronald E. Crochiere et R. Rabiner, Prenctice-Hall, Inc., Englewood Cliffs, New Jersey 07362.

Le pourcentage de recouvrement peut être défini comme le rapport LDFT-L/LDFT où L (avec $1 < L < LDFT$) est la longueur des blocs d'échantillons, hors recouvrement, avant DFT.

Par exemple, si le recouvrement est du type « overlap-add », et comme illustré sur la figure, les moyens 1 permettent d'ajouter LDFT — L zéros à des blocs de L échantillons du signal incident, et les moyens 5 permettent un recouvrement par addition des blocs de LIDFT échantillons issus de l'IDFT.

Le pourcentage de recouvrement choisi est fonction des imperfections spectrales et distorsions du signal synthétisé tolérables par rapport au gabarit de filtrage désiré.

Le facteur de sur-échantillonnage (ou OVSF, pour "Over-Sampling Factor") est défini comme le rapport Fs/Fe.

Dans l'architecture considérée, les paramètres Fe, Fs, ΔF, LDFT et LIDFT sont donc liés par les relations suivantes :

$$Fe = LDFT * \Delta F$$

$$Fs = LIDFT * \Delta F$$

$$Fs = Fe * (LIDFT/LDFT).$$

Comme indiqué précédemment, il serait souhaitable de disposer d'une méthode pour le choix des valeurs de ces différents paramètres, de manière à optimiser les performances. La présente invention a notamment pour but de répondre à ce besoin.

Suivant l'invention, on prévoit essentiellement que, pour une fréquence d'échantillonnage d'entrée donnée, un ordre de grandeur donné de la fréquence d'échantillonnage de sortie, et un ordre de grandeur donné de la résolution fréquentielle requise, la longueur de la DFT et la longueur de l'IDFT sont choisies de manière à permettre de choisir le plus finement possible le pourcentage de recouvrement et/ou le facteur de sur-échantillonnage.

Par exemple, dans une application au système UMTS (pour « Universal Mobile Telecommunication System »), la fréquence d'échantillonnage d'entrée Fe est égale à 3.84 MHz, la valeur souhaitée pour la fréquence d'échantillonnage de sortie Fs est de l'ordre de 80 MHz, et la valeur souhaitée pour la résolution fréquentielle ΔF est de l'ordre de 80kHz, pour obtenir une bonne précision de représentation deu gabarit spectral du filtre de canal.

Ainsi, suivant un premier mode de réalisation, dans l'exemple d'application considéré à l'UMTS, et avec ΔF = 80 kHz, si l'IDFT est implémentée par exemple au moyen d'un algorithme de type Cooley-Tuckey, et si la DFT est implémentée par exemple au moyen d'un algorithme de calcul de type Rader-Vinograd, on peut alors choisir:

$$LDFT = 48$$

$$LIDFT = 1024.$$

On a alors :

LIDFT/LDFT = 1024/48,

soit, une fois cette fraction réduite :

LIDFT/LDFT = 64/3.

Par ailleurs les valeurs L possibles doivent permettre un phasage parfait des échantillons de sortie (à savoir un raccordement dans le cas de « overlap-save », ou un recouvrement par addition dans le cas de « overlap-add »). Pour cela si LIDFT/LDFT est fractionnaire, les seules valeurs de L possibles sont, parmi les valeurs de 1 à LDFT, celles respectant le critère :

(LIDFT/LDFT) * L entier.

Si, comme c'est le cas en particulier dans l'exemple d'application à l'UMTS, on veut pouvoir obtenir un choix important de recouvrements possibles, il faut alors que LIDFT/LDFT soit une fraction, une fois réduite, avec un très petit dénominateur car c'est ce dénominateur qui définit le quantum de réglage du recouvrement.

Par exemple, dans l'exemple d'application considéré à l'UMTS, L peut être choisi égal à 36, ou tout autre multiple de 3 inférieur à L=48, sachant que la puissance de calcul nécessaire est inversement proportionnelle à L (le traitement bloc complet est effectué toutes les L*Fe secondes) .

Ainsi, et de manière plus générale, suivant ce premier mode de réalisation, si le rapport LIDFT/LDFT n'est pas entier, le dénominateur de la fraction LIDFT/LDFT une fois réduite est choisi le plus faible possible, de manière à permettre de choisir le plus finement possible la longueur L des suites ou blocs d'échantillons, hors recouvrement, avant DFT, et donc le pourcentage de recouvrement.

Suivant un deuxième mode de réalisation, si la DFT et l'IDFT sont implémentées par exemple au moyen d'un algorithme de calcul de type Rader-Vinograd, on peut alors choisir, dans l'exemple d'application considéré à l'UMTS:

LDFT = 45 = 5*9 (soit LDFT autour de 48)

LIDFT = (5*9) * (7*4) (soit LIDFT= LDFT * OVSF, avec OVSF proche de 28, pour ne pas être trop au-dessus de 80 MHz, ici 107,52 MHz).

Ainsi, suivant ce deuxième mode de réalisation, si le rapport LDFT/LIDFT est entier, les longueurs LDFT et LIDFT ont intérêt à être choisies de manière à permettre de choisir le plus finement possible le facteur de sur-échantillonnage, et donc une fréquence d'échantillonnage de sortie la plus proche possible de la valeur souhaitée.

En outre, comme indiqué précédemment, un autre problème est que, notamment une fois le choix de tels paramètres effectué, l'échantillon de fréquence le plus proche issu de la DFT ne correspond pas nécessairement à la fréquence centrale souhaitée pour chaque porteuse. Autement dit, la canalisation ainsi obtenue ne coïncide pas nécessairement avec celle requise pour le système considéré.

La présente invention a également pour but de résoudre ce problème.

Essentiellement, suivant l'invention, avant d'effectuer ledit calcul de DFT, on effectue une translation en fréquence, dans le domaine temporel, d'un décalage DF égal à la différence algébrique entre la fréquence centrale souhaitée pour le signal filtré correspondant et l'échantillon de fréquence le plus proche issu dudit calcul de DFT.

Une telle translation en fréquence est effectuée par des moyens repérés 7 sur la figure. Ainsi, pour le coût d'une multiplication complexe au rythme Fe par porteuse considérée, on peut synthétiser la fréquence que l'on veut. Les moyens nécessaires à la génération de DF, repérés 8 sur la figure, peuvent se limiter à une table courte quand les relations harmoniques entre Fe, LDFT et DFmin (c'est-à-dire DF minimum) sont simples. Dans l'exemple d'application à l'UMTS, où lesdites fréquence centrales sont réglables avec un pas de 200 kHz, il faut, compte tenu du centrage du spectre, prévoir un réglage par pas de 100 kHz, soit DFmin = 100kHz — 80kHz = 20 kHz. Les moyens 8 peuvent dans ce cas, au lieu d'un NCO (pour « Numerically Controlled Oscillator » en anglais), se limiter à une petite table trigonometrique de taille Fe/20khz soit 192 valeurs, réductible à 192/8=24 valeurs réelles (cosinus(k*2*pi/24)) en utilisant avantageusement les proprietes des symetries trigonometriques.

En outre, la présente invention permet de résoudre un autre problème qui est celui des sauts de phase apparaissant en sortie entre le dernier echantillon d'une IDFT et le 1er de l'IDFT suivante, sauts de phase dûs à une longueur L non sous multiple de LIDFT.

Essentiellement, suivant l'invention, avant d'effectuer ledit calcul de DFT, et pour compenser les sauts de phase entre échantillons en sortie de l'IDFT, on effectue une multiplication complexe des échantillons d'entrée par un complexe de module unitaire et de phase opposée au saut de phase à compenser.

Le saut de phase à compenser étant périodique et prévisible par la fraction L/LDFT, ledit complexe s'exprime sous la forme :

decp=exp(2*j*pi*numc/LDFT*L*(NUMT-1))

NUMT etant le numero chronologique relatif des tranches ou blocs de L échantillons
numc etant le numero de canal IDFT correspondant à la frequence centrale de la porteuse considérée, autrement dit numc est le rapport Fc/Fs modulo LIDFT (Fc frequence voulue pour la porteuse).

L'implémentation de cette correction nécessaire n'a pas de coût operatif car ces moyens peuvent être integrés dans les moyens 7 et 8. Par ailleurs dans une implementation tabulée des « decp » la table reste de taille faible car on choisit toujours des fractions LDFT/L à faible dénominateur (L<LDFT).

Par ailleurs, la présente invention permet également de résoudre un autre problème qui est le suivant.

On considère le cas où la technique de recouvrement utilisée est la technique dite en anglais de « overlap-add », c'est-à-dire où on ajoute à des blocs de L échantillons consécutifs et ne se recouvrant pas du signal incident LDFT — L zéros pour former des blocs de LDFT échantillons sur lesquels est effectuée une DFT de longueur LDFT.

Suivant l'art antérieur, et comme décrit également dans les documents précités, les LDFT — L zéros sont placés à la fin des blocs de LDFT échantillons.

Or, la DFT opérant sur des blocs d'échantillons de durée limitée, et le spectre issu de la DFT étant également limité, des phénomènes de recouvrement dans le domaine temporel se produisent, responsables de dégradation de qualité du signal synthétisé.

La présente invention a également pour but de limiter ces dégradations.

Essentiellement, suivant l'invention, afin d'avoir une dégradation symétrique pour les échantillons situés aux extrémités droite et gauche du bloc de LDFT échantillons, et donc afin d'avoir un signal synthétisé de meilleure qualité, on fait subir aux LDFT échantillons du bloc une rotation, de manière à ce que les LDFT — L zéros soient placés au centre du bloc, et à ce que les L échantillons de signal soient placés de part et d'autre de ces LDFT — L zéros.

Sur la figure, une telle rotation d'échantillons est illustrée comme incluse dans les moyens 1.

Par exemple, dans l'exemple d'application considéré à l'UMTS, où LDFT est égal à 48 et L est égal à 36, un bloc appliqué à l'entrée de la DFT comporte, dans l'ordre :

- les échantillons n°19 à 36 d'un bloc de 36 échantillons de signal
- 12 échantillons constitués par des zéros
- les échantillons n°1 à 18 du bloc de 36 échantillons de signal.

Un gain additionnel est alors obtenu dans cet exemple sur le retard de groupe, réduit de 24 échantillons d'entrée soit 512 échantillons de sortie ou 6.25 microsecondes.

**Revendications**

1. Procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, un calcul de transformée de Fourier discrète inverse IDFT, un recouvrement des blocs d'échantillons traités, et un sur-échantillonnage, et ledit procédé étant **caractérisé en ce que**, pour une fréquence d'échantillonnage d'entrée donnée, un ordre de grandeur donné de la fréquence d'échantillonnage de sortie, et un ordre de grandeur donné de la résolution fréquentielle requise, la longueur LDFT de la DFT et la longueur LIDFT de l'IDFT sont choisies de manière à permettre de choisir le plus finement possible le pourcentage de recouvrement et/ou le facteur de sur-échantillonnage.

2. Procédé selon la revendication 1, **caractérisé en ce que**, si le rapport LIDFT/LDFT n'est pas entier, le dénominateur de la fraction LIDFT/LDFT une fois réduite est choisi le plus faible possible, de manière à permettre de choisir le plus finement possible la longueur L des blocs d'échantillons, hors recouvrement, à l'entrée de la DFT, et donc le pourcentage de recouvrement.

3. Procédé selon la revendication 2, **caractérisé en ce que**, la fréquence d'échantillonnage d'entrée étant égale à 3.84 MHz, la valeur souhaitée pour la fréquence d'échantillonnage de sortie étant proche de 80 MHz, et la valeur souhaitée pour la résolution fréquentielle étant proche de 80kHz, LDFT est choisie égale à 48 et LIDFT est choisie égale à 1024.

4. Procédé selon la revendication 1, **caractérisé en ce que**, si le rapport LDFT/LIDFT est entier, les longueurs LDFT et LIDFT sont choisies de manière à permettre de choisir le plus finement possible le facteur de sur-échantillonnage, ou la fréquence d'échantillonnage de sortie.

5. Procédé selon la revendication 4, **caractérisé en ce que**, la fréquence d'échantillonnage d'entrée étant égale à 3.84 MHz, la valeur souhaitée pour la fréquence d'échantillonnage de sortie étant proche de 80 MHz, et la valeur souhaitée pour la résolution fréquentielle étant proche de 80kHz, LDFT est choisie égale à 45 et LIDFT est choisie égale à 1260.

6. Procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, et un calcul de transformée de Fourier discrète inverse IDFT, et ledit procédé étant **caractérisé en ce que**, avant d'effectuer ledit calcul de DFT, on effectue une translation en fréquence, dans le domaine temporel, d'un décalage DF égal à la différence algébrique entre la fréquence centrale souhaitée pour le signal filtré correspondant et l'échantillon de fréquence le plus proche issu dudit calcul de DFT.

7. Procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, et un calcul de transformée de Fourier discrète inverse IDFT, et ledit procédé étant **caractérisé en ce que**, avant d'effectuer ledit calcul de DFT, et pour compenser les sauts de phase entre échantillons en sortie de l'IDFT, on effectue une multiplication complexe des échantillons d'entrée par un complexe de module unitaire et de phase opposée au saut de phase à compenser.

8. Procédé selon la revendication 7, **caractérisé en ce que** le saut de phase à compenser étant périodique et prévisible par la fraction L/LDFT, ledit complexe s'exprime sous la forme :

decp=exp(2*j*pi*numc/LDFT*L*(NUMT-1))

NUMT etant le numero chronologique relatif des tranches ou blocs de L échantillons,
numc etant le numero de canal IDFT correspondant à la frequence centrale de la porteuse considérée, ou au rapport Fc/Fs modulo LIDFT (Fc frequence voulue pour la porteuse).

9. Procédé pour optimiser les performances d'un émetteur pour système de radiocommunications mobiles, ledit émetteur mettant en oeuvre différents traitements incluant un calcul de transformée de Fourier discrète TFD, un filtrage dans le domaine fréquentiel, un calcul de transformée de Fourier discrète inverse IDFT, et un recouvrement des suites ou blocs d'échantillons traités, ledit recouvrement étant obtenu en ajoutant LDFT — L zéros à des blocs de L échantillons de signal incident pour obtenir des blocs de LDFT échantillons à appliquer à une DFT de longueur LDFT, et ledit procédé étant **caractérisé en ce qu'**on fait subir aux LDFT échantillons de ces blocs une rotation, de manière à ce que les LDFT — L zéros soient placés le plus au centre possible de ces blocs, et à ce que les L échantillons de signal soient placés de part et d'autre de ces LDFT — L zéros.

10. Procédé selon la revendication 9, **caractérisé en ce que** ladite rotation est effectuée de manière à ce que les LDFT — L zéros soient placés le plus au centre possible de ces blocs, à un échantillon près lorsque L est impair.

11. Emetteur pour système de radiocommunications mobiles, comportant des moyens pour mettre en oeuvre un procédé selon l'une des revendications 1 à 10.